# FASCICULE DE BREVET EUROPEEN

(11) **EP 1 421 330 B1**
(45) Date de publication et mention de la délivrance du brevet: **09.04.2008**
(21) Numéro de dépôt: 02737670.6
(22) Date de dépôt: 28.05.2002
(51) Int. Cl.: G01B 11/30

(54) **PROCEDE DE MESURE OPTIQUE DE DISTANCES**
VERFAHREN ZUR OPTISCHEN DISTANZENMESSUNG
METHOD FOR OPTICALLY MEASURING DISTANCES

(30) Priorité: 30.08.2001 BE 200100567
(43) Date de publication de la demande: 26.05.2004
(73) Titulaire: Centre de Recherches Metallurgiques - Centrum voor de Research in de Metallurgie, 1200 Bruxelles (BE)
(72) Inventeur: SCHYNS, Marc, B-4960 ROCLENGE-SUR-GEER (BE); MATHY, Cécile, B-4347 Voroux-Goreux (BE)
(74) Mandataire: pronovem
(86) Numéro de dépôt international: PCT/BE2002/000085
(87) Numéro de publication internationale: WO 2003/019114

(56) Documents cités:
- WO-A-94/02658
- WO-A-98/21550
- US-A- 4 735 508
- US-A- 4 948 258
- US-A- 5 087 822
- US-A- 5 477 332
- US-A- 6 154 279

## Description

### Objet de l'invention

La présente invention se rapporte à un procédé destiné à la mesure de distances sur des bandes de métal brillant ou spéculaire.

En particulier, l'invention concerne un procédé pour la mesure de forme de bandes galvanisées au trempé à la sortie de l'essoreur.

L'invention se rapporte également au dispositif pour la mise en oeuvre du procédé.

### Arrière-plan technologique

On connaît depuis des années la production par trempage à chaud d'aciers recouverts de zinc, d'alliage de zinc, d'alliage ferro-zinc ou d'aciers galvanisés recuits appelés galvannealed. L'intérêt manifesté envers ces produits par l'industrie automobile a engendré de hautes exigences en termes de propriétés d'homogénéité de produit et de performance à l'usage de ces produits recouverts.

Dans une ligne de galvanisation au trempé à chaud, la bande émergeant en sortie du bain de zinc est essorée en utilisant des "couteaux à air" soufflant de l'air comprimé sur le zinc liquide entraîné par chaque côté de la bande. La pression des couteaux à air ainsi que la distance entre le couteau et la bande devraient idéalement être régulées en temps réel de sorte que l'épaisseur du dépôt soit gardée aussi proche que possible de la valeur souhaitée de chaque côté de la bande.

En vue de garantir un recouvrement uniforme, il est essentiel de conserver une forme et une position de la bande en mouvement correctes en face des lèvres de l'appareil d'essorage. En effet, des variations de la position de la bande, dans la direction transverse à la direction de défilement, en face des couteaux vont produire une dispersion de l'épaisseur du dépôt. Ces fluctuations d'épaisseur affectent la qualité du produit final. En particulier, dans le procédé de recuit galvanisation, des variations de poids de zinc provoquent automatiquement des variations du contenu en fer du dépôt et de là, des hétérogénéités dans les propriétés requises par l'utilisateur.

Suite à des tensions thermiques et mécaniques, des instabilités de la pression d'air ou des vibrations de structure, la planéité de la bande défilant devant les lèvres n'est cependant pas parfaite. Des écarts significatifs dans l'épaisseur du dépôt sont observés dans les directions transverse et longitudinale.

En vertu de la dispersion du poids de revêtement durant le traitement, il est nécessaire d'établir une valeur de consigne suffisamment élevée en vue d'obtenir le poids de dépôt minimum requis par le consommateur.

Calculons le gain qui serait apporté par une réduction de 1 g/m² dans le poids de revêtement en zinc.

Soient T le nombre de tonnes produites par an, Eₘ l'épaisseur moyenne de la bande (en m), P le prix du zinc au kg et D le poids spécifique de l'acier (en kg/m³).

On a:

| | |
|---|---|
| Gain de zinc (tonnes/an) | 2T/(D x E*ₘ* x 1000) |
| Gain de zinc (kg/tonne d'acier) | 2/(D x Eₘ) |
| Gain en argent (EURltonne d'acier) | 2 x P/(D x Eₘ) |
| Gain en argent (EUR/an) | 2 x P x T/(D x Eₘ) |

Par exemple, si T = 350 000 tonnes/an, Eₘ = 0,0007 m, D = 7800 kg/m³ et P = 0,85 EUR/kg (1 050 $/tonne), les gains suivants seront obtenus pour une réduction de 1g/m²:
Gain de zinc : 128 tonnes de zinc/an
Gain de zinc: 0,366 kg de zinc/tonne d'acier
Gain en argent : 0,31 EURltonne d'acier ou 108,5 kEUR/an.

Ces données montrent qu'il vaut la peine de rechercher des solutions adéquates pour accroître la maîtrise de l'épaisseur du revêtement.

### Etat de la technique

Beaucoup de méthodes peuvent être utilisées pour la mesure de distance et de forme. Les méthodes optiques sont souvent préférées par rapport aux méthodes capacitives et inductives, dans la mesure où elles sont moins sensibles aux fluctuations de constantes des propriétés des matériaux. Cependant, pour l'application particulière de galvanisation au trempé à chaud, il faut prendre en considération plusieurs facteurs qui peuvent affecter la performance d'un capteur optique.

Les principaux facteurs considérés sont les suivants :
- haut coefficient de réflexion de la bande ;
- vibration des supports ;
- inclinaison de la surface de bande par rapport à l'axe optique du capteur ;
- variation de l'indice de réfraction due aux conditions atmosphériques (température, humidité, pression) ;
- dépôts de vapeurs de zinc sur les fenêtres optiques.

Comme la bande sortant du dispositif d'essorage possède une surface fortement réfléchissante, un soin particulier doit être pris pour obtenir une mesure correcte. Ainsi, dans le cas de surfaces lisses (spéculaires), l'angle des rayons lumineux réfléchis par la surface est égal à leur angle d'incidence. Par contre, une surface présentant une texture rugueuse diffuse de manière aléatoire les rayons incidents. La surface paraît terne car elle réfléchit la lumière à presque tous les angles.

Dans une ligne de galvanisation conventionnelle, la distance entre la bande en mouvement et les lèvres du dispositif d'essorage se situe dans un intervalle allant de 5 à 15 mm. En utilisant un modèle mathématique développé précédemment, on trouve que les instabilités de 1 mm en valeur crête de la position de la bande entre les couteaux à air provoquent des variations allant jusqu'à 9 g/m² pour des conditions opératoires standard. Cela signifie qu'une résolution de 0,1 mm devrait être atteinte pour distinguer des fluctuations d'épaisseur de coating de 1 g/m².

Pour l'intervalle et la sensibilité mentionnés ci-dessus, il y a deux types principaux de capteurs utilisés fréquemment dans les applications de métrologie sans contact, à savoir le capteur à triangulation laser et son extension à des méthodes de projection de franges et le capteur laser coaxial ou autofocus. L'interférométrie laser est également une technique habituellement utilisée dans les mesures à très haute résolution. Cependant, les méthodes interférométriques sont parfois trop sensibles. Ainsi, des perturbations de l'environnement limitent la fiabilité de la mesure. Les capteurs de déplacement à fibres optiques sont moins largement répandus à cause de leur domaine limité de mesure.

### Capteurs à triangulation

Les capteurs à triangulation appartiennent à deux catégories, respectivement le type diffus et le type spéculaire.

Dans le cas des capteurs diffus, le faisceau laser est projeté normalement sur la surface objet et le faisceau diffusé par la surface objet est renvoyé au détecteur à travers une lentille se trouvant à l'angle de triangulation. Un avantage du capteur diffus est que le spot laser est projeté sur la même position latérale sur la surface, indépendamment de la hauteur de la surface. Mais de tels capteurs posent problème dans le cas de surfaces miroirs (spéculaires) comme dans la présente demande, parce que le faisceau laser est essentiellement réfléchi vers l'arrière en direction de l'optique source.

Pour les capteurs spéculaires, le faisceau laser est projeté par rapport à la normale de la surface au même angle que celui de l'optique source, qui est l'angle de collecte par l'optique réceptrice. L'avantage de ces capteurs est qu'ils peuvent être utilisés pour les mesures sur des surfaces brillantes. Cependant, le spot laser projeté sur la surface se déplace latéralement, lorsque la distance de la surface mesurée change. Un autre désavantage est l'erreur ou l'absence de mesure causée par des surfaces inclinées, même légèrement. Le "cross-bow" ou les vibrations rencontrées sur les lignes de galvanisation peut être suffisant pour générer de telles situations.

Dans les documents WO-A-94/026 58 et JP-A-55 141 556, de tels capteurs sont déplacés dans la direction de la largeur de la bande pour évaluer le cross-bow. Deux inconvénients majeurs existent dans ce cas :
- des incertitudes de mesure sont générées par le mécanisme de translation (usure, etc.) ;
- suite au temps de translation, une fluctuation rapide de la bande ne peut être évaluée.

### Techniques de franges projetées

Des images de franges projetées peuvent être formées par différentes méthodes. Dans le cas général, une structure en forme de réseau ou une image d interférence est projetée sur la surface test. Des variations de hauteur conduisent à une déformation des franges projetées qui à leur tour sont comparées à l'original ou à la structure de réseau synthétique. La plupart des systèmes de mesure de topographie de surface par projection de franges utilisent une seconde grille pour générer des franges de Moiré qui représentent des contours de hauteur plus ou moins égale. Dans beaucoup de dispositifs, des caméras CCD, des tableaux de traitement d'images de même que des microprocesseurs et ordinateurs ont été incorporés pour l'analyse automatique de franges. Cependant, les projections d'images de franges ne conviennent pas pour la mesure sur des surfaces spéculaires comme c'est le cas dans la présente demande.

### Capteurs autofocus

A cause de l'aspect de focalisation dynamique des capteurs autofocus, la taille de spot est maintenue constante quelle que soit la distance entre le capteur et la surface objet. La distribution de lumière est uniforme sur le spot entier. De là, la résolution de ces capteurs peut être jusqu'à un ordre de grandeur plus élevée que la résolution des capteurs de triangulation. Cependant, les capteurs autofocus présentent des désavantages. A cause de la faible taille de spot, ils tendent à causer des erreurs en présence même de faibles changements de texture de surface. Ils sont moins robustes et possèdent un temps de réponse plus long que les capteurs de triangulation à cause des mouvements mécaniques de haute précision nécessaires pour la recherche de zéro du signal d'erreur de foyer.

### Capteurs de déplacement à fibre optique

Ces capteurs sont des transducteurs de déplacement qui utilisent un faisceau de fibres de verre pour transmettre et recevoir de la lumière d'une surface cible. A l'extrémité de la sonde, les rayons non collimatés divergent vers l'extérieur à partir de chaque fibre de transmission, selon un cône. Les rayons lumineux sont réfléchis sur la surface cible vers des fibres de réception adjacentes. Sur base de la détection de l'intensité de la lumière réfléchie, différentes sensibilités de déplacement peuvent être créées par une combinaison de sources lumineuses, de types de fibres, de formes et de tailles de faisceau de fibres, de distributions de fibres transmettant et recevant la lumière ainsi que d'arrangements de faisceaux transmettant et recevant la lumière. Plus la surface est lisse, meilleures sont les performances attendues du capteur.

Les capteurs à fibres optiques existent sous deux types, le type dépendant de la réflectivité et le type à réflectivité compensée.

Les capteurs à réflectivité compensée sont construits avec au moins deux faisceaux de fibres. Chaque faisceau peut être considéré comme étant un capteur séparé, ayant une courbe de sensibilité variant avec le déplacement. La compensation de réflectivité est obtenue à partir du rapport des intensités de sortie de ces sondes à fibres séparées. Comme la réflectivité de la cible change sur une grande échelle, les intensités de sortie des détecteurs individuels augmentent ou diminuent proportionnellement, ce qui laisse le rapport des sorties non affecté par les changements de réflectivité. Afin d'assurer la compensation de réflectivité avec plus de précision, la surface cible à l'intérieur de la surface totale du faisceau de fibres optiques doit être uniformément réfléchissante. Habituellement, il est prudent de supposer, dans le cas des bandes continues, que les variations de réflectivité sont négligeables sur la faible surface couverte par le capteur à fibre optique. De tels capteurs sont à réponse rapide, robustes, très petits et peu coûteux. On peut donc imaginer de multiplexer plusieurs capteurs de manière à obtenir la forme de la bande à proximité immédiate des buses des couteaux à air. Dans le cas du recuit galvanisation, les mesures réalisées avec ces capteurs ne seront pas affectées par le champ électromagnétique intense généré par le chauffage à induction. Cependant, suite à leur proximité de la bande imposée par le type de mesure à effectuer (fibres optiques), il y a un risque de dépôt de vapeurs de zinc sur l'extrémité des fibres optiques, qui perturberait la mesure.
Le document US-A-5,087,822 divulgue un appareil et un procédé pour inspecter la qualité de surface d'une bande métallique en mouvement, où une région éclairée par deux lampes est contrôlée par un détecteur. Les angles d'incidence des faisceaux lumineux émis par les lampes correspondent respectivement aux champs noirs proche et lointain. Le détecteur saisit des portions de la bande mises en évidence et rendues brillantes par des irrégularités de surface. Par l'utilisation d'une pluralité de lampes avec un seul détecteur, comme un enregistreur vidéo, on fournit un dispositif bon marché quoique très sensible pour la détection d'irrégularités à la surface d'une bande en mouvement. Le système peut être observé par un opérateur pour déterminer la position où se situent des irrégularités mais, également, il peut être adapté pour documenter au sujet des endroits sur la bande en mouvement où se produisent les irrégularités.
Le document WO 98/21550 A décrit un système et un procédé pour imager des surfaces réfléchissantes dans lequel une source de lumière diffuse ayant un intervalle de fréquence prédéterminé selon un motif prédéterminé est dirigée vers la surface réfléchissante. La lumière réfléchie par la surface est filtrée pour éliminer la lumière ambiante et atteint un détecteur. En utilisant une triangulation au moyen de deux points dans le motif, un microprocesseur détermine la distance d'une image formée derrière la surface réfléchissante. Le microprocesseur calcule également la distance de la surface réfléchissante en relation avec la distance de l'image et les positions de la source de lumière diffusée et du détecteur. Alternativement, on peut utiliser deux détecteurs et un point source de lumière diffuse.
Le document US-A-5,477,332 divulgue un système contrôlé par ordinateur pour déterminer différentes caractéristiques physiques de la surface d'un objet, qui comprend un réseau de lumière source, positionné pour illuminer la surface à évaluer, tel que les lumières individuelles du réseau illuminent l'objet sur une base mutuellement exclusive, un radiomètre, positionné pour recevoir la lumière de l'objet, produisant des données image relatives aux positions des pixels de lumière et un ordinateur qui interprète les données image et détermine au moins l'ondulation, le rayon de courbure et l'inclinaison de la surface.
Le document US-A-4,735,508 divulgue une méthode pour mesurer la courbure d'une surface réfléchissante, comprenant les étapes de diriger une paire de faisceaux lumineux collimatés sur une portion essentiellement lisse de la surface réfléchissante et de mesurer la séparation entre les images des faisceaux lumineux réfléchies par la surface, en guise de représentation de la courbure de la surface. Un appareil utilisant cette méthode comprend une paire de lasers pour produire les faisceaux lumineux collimatés respectifs, un montage laser disposé pour diriger les faisceaux de lumière séparés comme faisceaux de lumière essentiellement parallèles sur la portion lisse de la surface réfléchissante mesurée pour produire des points brillants respectifs sur la surface, en recevant les images des points brillants sur une surface cible diffuse, en regardant ces images de points brillants avec un capteur pour produire un motif d'intensité lumineuse couvrant les points et en calculant la séparation entre les images des points brillants à partir du motif d'intensité lumineuse comme mesure de la courbure de la surface.
Le document WO 94/02658 A divulgue une installation pour la galvanisation en continu d'une bande d'acier, muni d'une paire de buses d'essorage en aval d'au moins un rouleau-guide, qui peut être alimentée par un milieu d'essorage, en particulier de l'air comprimé, entre les corps des buses par rapport auxquels la bande est guidée à une distance des fentes de buses s'étendant transversalement à la direction de mouvement de la bande. Pour augmenter l'uniformité du recouvrement, dans une première forme d'exécution de l'invention, on alloue à l'un des deux corps de buse un instrument d'optique pour déterminer la distance entre la fente de la buse et la surface de la bande métallique, le signal de sortie duquel pouvant être entré dans le dispositif d'ajustement du rouleau-guide et/ou celui pour le corps de buse de manière telle que la distance entre la fente de buse et la surface de la bande métallique puisse prendre une valeur prédéterminée. Dans une seconde forme d'exécution de l'invention, l'instrument d'optique peut être déplacé parallèlement à la fente de buse pour couvrir au moins la région d'un bord de la bande métallique et le corps de la buse opposée possède un réflecteur sur lequel l'axe optique de l'instrument de mesure est dirigé dans sa position externe au bord de la bande métallique.
Selon le document US-A-6,154,279, les dimensions d'un trou d'usinage ou d'une tête de fixation sont déterminées avec précision et rapidité par un système de mesure non-destructif. Au moins un laser projette des points lumineux sur la surface à analyser. De la connaissance de l'angle de projection, et du déplacement latéral des points lumineux causé par des variations dans la profondeur de la surface, on peut calculer une profondeur effective de chaque point de la surface. Un ensemble de paramètres définissant un modèle mathématique du trou ou de la tête de fixation est ajusté à un ensemble de coordonnées de points mesurées sur la surface à analyser, en utilisant des techniques numériques conventionnelles. Les paramètres optimisés définissent les dimensions du trou d'usinage ou de la tête de fixation. La présente invention s'applique indépendamment du système de coordonnées utilisé pour réaliser les mesures, de sorte que l'invention élimine les erreurs causées par le désalignement des composants optiques. L'invention peut également fournir des avertissements automatiques lorsque les dimensions d'un trou d'usinage ou d'une tête de fixation particuliers dépassent des tolérances prédéterminées.
Dans le document US-A-4,948,258, l'étendue et/ou le profil d'une surface test, en particulier une surface sous-marine, sont déterminés en balayant un réseau holographique, au moyen d'un laser, structuré pour émettre un faisceau de lumière divergente définissant un réseau bidimensionnel de points dans un motif prédéterminé et en projetant un tel faisceau sur la surface test. Un récepteur, par exemple une caméra vidéo, identifie les positions des points dans le motif réfléchi par la surface test et une comparaison est effectuée entre ces positions et les positions respectives réfléchies préalablement de manière identique par une surface étalon. Les valeurs des déplacements des points de la surface test par rapport aux points de la surface étalon sont utilisées pour déterminer l'étendue ou l'orientation de la surface test par rapport au réseau holographique ou le profil de la surface test.

### Buts de l'invention

La présente invention vise à fournir une solution ne présentant pas les inconvénients de l'état de la technique.

En particulier, l'invention a pour but de mesurer des distances entre une bande de métal quasi-spéculaire en mouvement et un dispositif fixe, tel que par exemple, un essoreur dans une ligne de galvanisation au trempé à chaud.

Comme corollaire, l'invention vise à déterminer à tout instant tant la forme de ladite bande métallique que ses déplacements dans un plan orthogonal vis-à-vis de sa direction de défilement.

L'invention a comme but complémentaire de réduire, sur une ligne de galvanisation au trempé à chaud, la dispersion de poids de revêtement sur la bande, due notamment à l'effet de tuile", et en tout cas de réduire la différence entre la valeur de consigne et le poids minimum requis par le consommateur.

Enfin, l'invention a pour but de diminuer le coût de fabrication d'une tôle revêtue par le procédé de galvanisation au trempé à chaud.

### Principaux éléments caractéristiques de l'invention

La présente invention se rapporte à un procédé pour la mesure de distances par voie optique, de préférence par triangulation laser, sur une bande ou surface métallique spéculaire ou quasi-spéculaire en défilement continu dans une installation, de préférence de galvanisation d'acier au trempé à chaud, caractérisé par les étapes suivantes :
- un faisceau lumineux, dit faisceau incident, est émis par une source, de préférence une source laser, incorporée dans une tête de mesure, ladite source projetant un motif sous forme d'une pluralité de points, de préférence une ligne, disposés selon un axe perpendiculaire à la direction de défilement de la surface métallique, selon une direction d'incidence sur une partie fixe non spéculaire, de la dite installation ;
- premièrement, une première partie dudit faisceau est réfléchie par ladite partie fixe, selon la même direction que celle du faisceau incident et en sens opposé, vers un détecteur appartenant à ladite tête de mesure et se trouvant à proximité immédiate de ladite source ;
- deuxièmement, une autre partie dudit faisceau est réfléchie vers ladite bande métallique, d'où elle est encore réfléchie en direction dudit détecteur.

Avantageusement, le détecteur de la tête de mesure est une caméra qui reçoit l'image dudit motif projeté, d'une part à partir de ladite partie fixe et d'autre part à partir de la bande métallique, chaque point de l'image provenant de la bande métallique semblant correspondre à un point virtuel qui est le point symétrique par rapport à un plan moyen passant par ladite bande du point correspondant du faisceau incident sur ladite partie fixe. En outre, la détermination de la position et de la forme de la bande, de préférence en coupe transverse, sont déduites de l'image captée par ledit détecteur, lesdites mesures étant effectuées en temps réel.

Toujours selon l'invention, la partie fixe de l'installation est un essoreur en sortie de ligne continue de galvanisation au trempé à chaud, comprenant des couteaux à air et la tête de mesure projette sur cet essoreur une ligne lumineuse parallèle aux couteaux à air de celui-ci.

Selon une modalité de réalisation préférentielle, le procédé de l'invention est caractérisé par les étapes suivantes :
- étalonnage de la tête de mesure avant mise en marche de l'installation ;
- acquisition d'images en temps réel ;
- traitement des images obtenues, en tenant compte de t'étalonnage ;
- calcul, en une pluralité de points, de la distance entre la bande et les couteaux d'essorage.

De préférence, l'étalonnage est à son tour caractérisé au moins par les étapes suivantes :
- acquisition d'une image correspondant à un étalon comprenant une pluralité de lignes noires horizontales, c'est-à-dire parallèles aux lèvres de l'essoreur et une pluralité de lignes noires verticales, c'est-à-dire perpendiculaires auxdites lèvres, ledit étalon étant placé dans le plan de la réflexion du faisceau lumineux sur la partie fixe de l'essoreur et repéré par rapport à un point fixe de référence ;
- extraction d'une zone à traiter sur l'image et transformation de ladite zone en un tableau bidimensionnel de niveaux de gris ;
- extraction d'une pluralité de colonnes dudit tableau, correspondant à des abscisses fixées dans la zone à traiter ;
- détermination de la position desdites lignes horizontales par détection de leurs ordonnées auxdites abscisses ;
- extraction de plusieurs rangées du tableau de niveaux de gris à des ordonnées calculées en fonction de la position déterminée desdites lignes horizontales ;
- détermination de la position desdites lignes verticales par détection de leurs abscisses aux ordonnées calculées ;
- détermination des équations pour les différentes lignes de la grille par optimisation polynomiale à partir des coordonnées obtenues dans les étapes précédentes ;
- calcul des intersections desdites lignes horizontales et desdites lignes verticales représentées par leurs équations.

De manière encore préférée, le procédé de l'invention comprend les étapes suivantes :
- extraction, hors de ladite zone à traiter sur l'image, des niveaux de gris correspondant à une série de coordonnées, suivant l'équation d'une ligne verticale du procédé d'étalonnage, cette opération étant répétée pour une pluralité de lignes verticales virtuelles ;
- détection de la position des deux réflexions du laser le long de ces lignes virtuelles
- transformation des coordonnées donnant la position sur l'image des deux réflexions du laser, en coordonnées réelles relatives audit point de référence ;
- calcul de la position de la bande.

Pour effectuer cette transformation de coordonnées, on interpole avantageusement pour une verticale donnée, c'est-à-dire une abscisse donnée, sur une série d'ordonnées des points d'intersection avec les différentes horizontales de la grille d'étalonnage, lesdits points ayant été fournis par l'étalonnage.

De manière encore préférée, dans le calcul de la position de la bande, l'ordonnée calculée de chaque point de la bande pour une abscisse donnée correspondant au milieu des ordonnées des deux dites réflexions, l'abscisse desdits points est déterminée en établissant l'équation de la droite joignant le point nodal du détecteur, de préférence de la caméra, au point correspondant de l'image virtuelle de la ligne laser et en extrayant le point dont l'ordonnée correspond à ladite ordonnée calculée.

Selon une autre caractéristique de l'invention, on régule en boucle fermée et en temps réel, pour chaque couteau, l'intensité du jet d'air comprimé en fonction de la distance entre l'extrémité de la lèvre et la bande, pour diminuer ou minimiser la dispersion de l'épaisseur du revêtement sur la bande ou encore pour que l'épaisseur effective de revêtement soit proche d'une valeur de consigne.

Selon une modalité particulière du procédé de l'invention, au moins deux lignes laser sont émises par la source de sorte à obtenir sur le détecteur, de préférence la caméra, deux' courbes pour la première réflexion laser et deux courbes pour la réflexion sur la bande, et pour chaque paire de lignes, on détermine leur position ainsi que la distance séparant les deux lignes de la paire, l'information obtenue étant traitée pour déterminer l'inclinaison de ladite bande.

### Brève description des figures

La figure 1 représente une installation de galvanisation au trempé selon l'état de la technique.

La figure 2 représente une tête de détection selon la présente invention.

La figure 3 représente schématiquement la réflexion des rayons lumineux dans le dispositif selon l'invention.

La figure 4 représente une image vidéo non traitée sur un moniteur se trouvant dans la cabine de l'opérateur.

La figure 5 représente schématiquement un exemple de dispositif d'étalonnage pour la présente invention.

La figure 6 représente schématiquement l'aberration optique de l'objectif de la caméra.

La figure 7 représente schématiquement la projection dans le plan horizontal de la première réflexion.

### Description d'une forme d'exécution préférée de l'invention

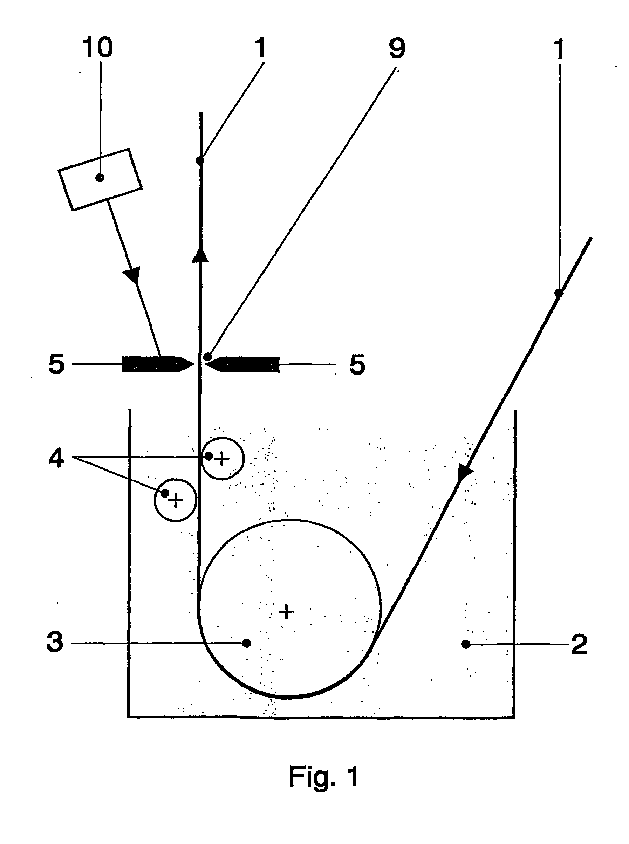

Dans une installation typique de galvanisation à chaud, telle que représentée à la figure 1, la bande d'acier 1 entre dans le bain de zinc liquide 2, change de direction au niveau du rouleau de fond 3 et ressort du bain en passant entre des rouleaux 4 de guidage et de correction de la forme de bande. A la sortie du bain, la bande passe entre les couteaux 5 d'un dispositif d'essorage pneumatique, destiné à mettre la couche de zinc à épaisseur sur le produit final.

La température du bain est typiquement de 460°C, celle de la bande à la sortie de l'essoreur de 430°C, celle de l'environnement pouvant atteindre 100°C.

Le rouleau de fond 3 impose une flexion à la bande. La traction sur la bande provoque alors généralement un "effet de tuile" ou "cross-bow". Comme le profil de la bande n'est pas plan, on constate une variation de l'épaisseur de la couche de zinc déposée, suite à ce défaut de planéité qui fait varier la distance 9 entre le métal et les couteaux à air.

L'invention consiste à tirer profit - ou en tout cas à s'accommoder - du fait que la bande, sortant fraîchement recouverte du bain de zinc liquide, présente une surface spéculaire ou quasi-spéculaire.

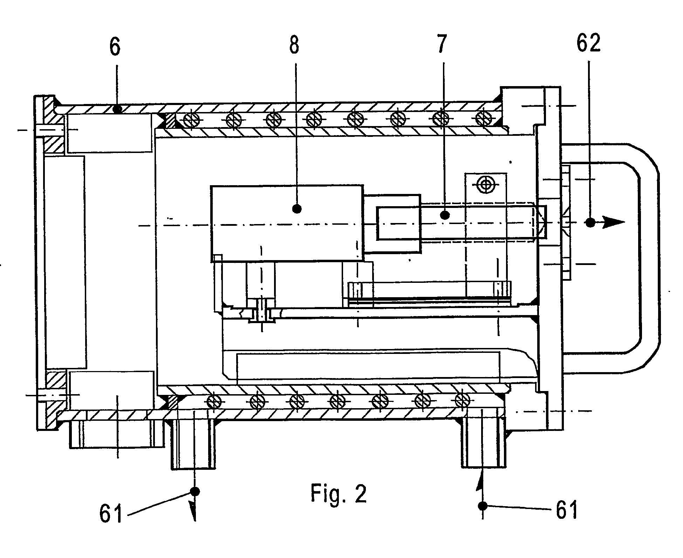

Selon une forme d'exécution préférée de l'invention, une tête de mesure 10 comprend une source lumineuse 7 et une caméra 8 inclus dans un même boîtier de protection 6. La figure 2 montre les détails de la tête de détection. Le laser 7 projette une ligne lumineuse sur la partie fixe de l'essoreur, parallèlement aux couteaux à air 5.

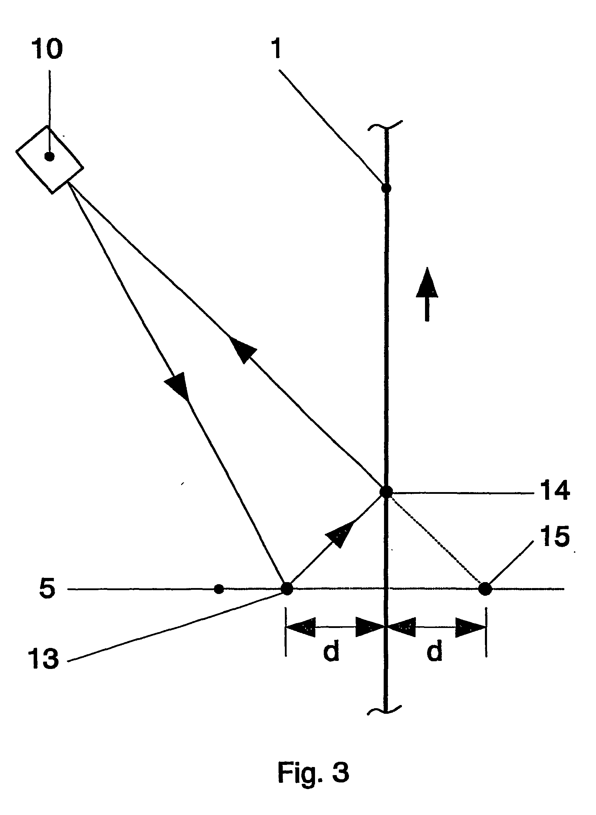

Le faisceau lumineux issu de la tête de mesure 10 est réfléchi une première fois (13) sur cette partie fixe et ensuite une deuxième fois (14) sur la bande 1 en mouvement, avant d'être intercepté par la caméra, un point virtuel 15 étant défini par effet miroir par rapport à la bande 1 (figure 3).

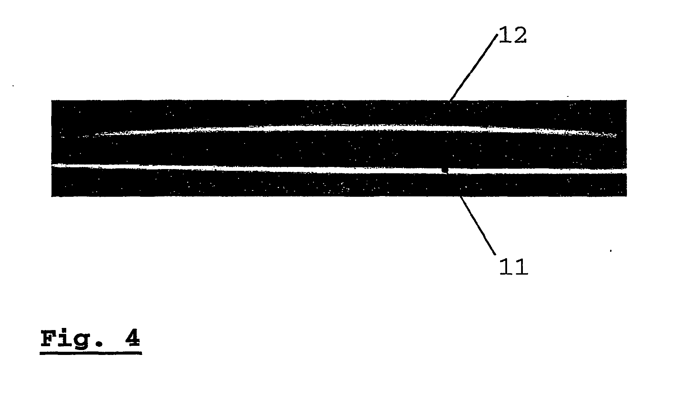

Chaque image acquise par la caméra contient donc deux lignes, tel que représenté à la figure 4 :
- la ligne 11 projetée directement par le laser sur une partie fixe du dispositif d'essorage et réfléchie directement vers la caméra ;
- la ligne 12 réfléchie par la bande recouverte en mouvement, qui apparaît déformée suite à l'effet de tuile.

Cette disposition présente plusieurs avantages majeurs :
- avec les capteurs de triangulation classique, il est difficile d'effectuer des mesures correctes dans la mesure où la bande défilante est réfléchissante. En effet, suite à la variation de la position (distance, angle) entre la source de lumière et la bande au cours du temps, la position du spot laser devant être reçu par le récepteur, par exemple une caméra, change également, ce qui conduit par moments à recevoir trop peu d'énergie réfléchie par la surface au niveau du récepteur. En effet, cette particularité est sans poser problème dans le cas d'une surface cible rugueuse mais est très gênante pour une surface spéculaire. En effet, le lobe de distribution de l'énergie est beaucoup plus étroit dans ce dernier cas. Le signal généré, par exemple une image, peut même carrément devenir non détectable pendant un temps non négligeable. Pour essayer de remédier à cet inconvénient, il faut alors augmenter la puissance du laser et/ou le gain du récepteur, par_exemple une caméra, sans toutefois être sûr du résultat ;
- réduction de l'erreur de mesure : suite aux mouvements relatifs accidentels ou perturbateurs apparaissant en triangulation classique entre le support de la source de lumière et le support du récepteur, des erreurs de mesure peuvent se produire. En particulier, la sensibilité du capteur diminue lorsque l'angle entre l'axe optique de la source de lumière et celui du récepteur diminue. En rassemblant les deux composants à distance fixe dans un même boîtier, cette source d'erreur peut être réduite ;
- simplification par la diminution du nombre de composants : par le fait que tous les composants sensibles à la chaleur sont dans une même enceinte, un seul système de refroidissement est requis pour protéger le système.

La figure 2 montre que la plaque de montage du laser et de la caméra est refroidie par circulation d'un fluide 61, de préférence de l'eau. Une atmosphère de gaz neutre 62, de préférence de l'azote, se trouvant à l'intérieur du boîtier est purgé en permanence par une ouverture dans le boîtier en face de la fenêtre optique. Le but de cette purge est double : augmenter l'effet de refroidissement et éviter le dépôt de vapeurs de zinc sur la fenêtre optique.

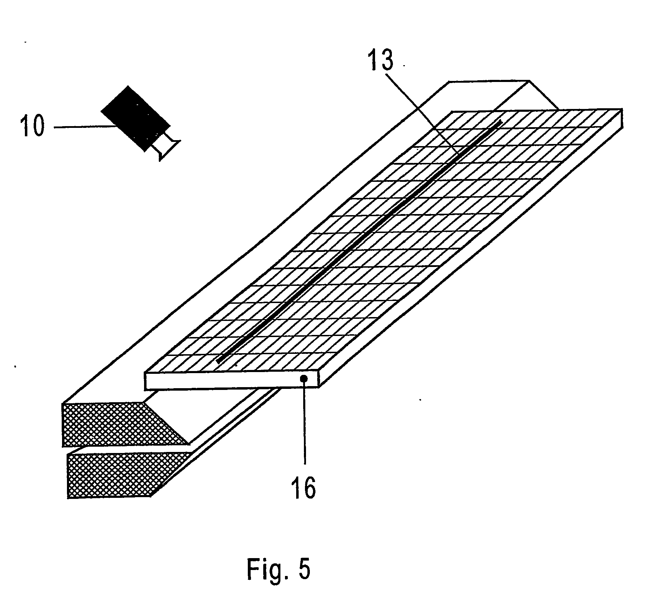

Un logiciel spécifique pour le traitement des images acquises en vue de calculer la distance entre l'essoreur et la bande a été développé, de même qu'un système de calibration a été réalisé. Le dispositif d'étalonnage 16 est par exemple une surface fraisée, comportant un certain nombre de repères (lignes), telle que représentée à la figure 5. La calibration est effectuée avant mise en marche de l'installa6on.

Grâce à un montage adéquat du diaphragme de l'objectif, les images sont directement exploitables pour une estimation grossière de la forme de bande. La figure 4 montre un exemple d'image vidéo non traitée (1600 mm de largeur de bande). La courbe supérieure dans la figure montre le "cross-bow" relatif à la forme de bande, tandis que l'image inférieure est une ligne de référence.

Le dispositif de l'invention est capable de mesurer "on-line" tant la forme que la position de la bande fortement réfléchissante et qui est en mouvement entre les couteaux à air. Le dispositif offre les avantages suivants :
- faible temps de réponse ;
- absence de contact ;
- compatibilité avec un pouvoir réfléchissant élevé ;
- faible sensibilité aux changements de réflexion dé la bande ;
- mesure très proche des lèvres du dispositif d'essorage ;
- faible impact sur l'environnement.

Dans le but de réduire la dispersion du revêtement, le capteur est intégré dans un système de régulation en boucle fermée qui est capable d'ajuster "on-line" les paramètres de manière telle que l'épaisseur du revêtement soit maintenue proche de la valeur de consigne.

Essentiellement, deux stratégies peuvent être suivies. La plus conventionnelle consiste à garder la bande plane entre les couteaux à air en agissant sur les rouleaux de guidage à l'intérieur du bain de zinc, en fonction de la mesure de forme de bande. Grâce à des *couteaux à air* à_fentes modulables *(Dynamic Air Knives,* DAK) développés récemment, une autre stratégie consiste à changer "on-line" le profil des lèvres d'essorage en fonction des mesures de forme de bande en vue d'assurer une épaisseur de dépôt uniforme.

Une méthode connue de l'homme de l'art pour éviter la dispersion de l'épaisseur du dépôt de zinc sur la bande est donc de corriger la forme de tuile affectant la bande en changeant la position des rouleaux de réglage immergés dans le bain. Cette méthode n'assure pas une correction parfaite de forme et donc n'est pas totalement efficace. On connaît également l'essorage électromagnétique, lequel influence favorablement la stabilisation de la bande effectuée en redressant la bande à l'aide d'électroaimants.

En outre, il peut ne pas être souhaitable d'utiliser ces méthodes, dans la mesure où on peut souhaiter précisément provoquer le "cross-bow" de la bande en vue d'obtenir une bande plus stable à la sortie du bain de galvanisation.

Selon la présente invention on peut encore avantageusement adapter le jet d'air comprimé en fonction de la distance transversale par rapport à une extrémité de la bande. Ainsi, le couteau à air est subdivisé transversalement, par rapport à la direction de défilement de la bande, en une série de zones dont la géométrie est modulable (non représenté). On peut dès lors adapter et réguler, grâce au procédé de l'invention, la pression d'air à la sortie de chaque lèvre individuelle, de sorte à éliminer presque exactement l'excédent de zinc résultant du "cross-bow".

La présente invention n'est pas limitée au domaine du revêtement à chaud ou de la galvanisation de tôles d'acier mais peut être appliquée à la mesure de distances ou de formes dans le cas de bandes défilantes fortement réfléchissantes ou spéculaires.

### Description d'un exemple de procédé d'étalonnage

Pour prendre en compte les différentes déformations introduites par le système optique, on réalise un étalonnage global.

Un exemple de forme d'exécution préférentielle du système d'étalonnage est représenté à la figure 5.

La figure 5 montre une grille comprenant 12 lignes noires "horizontales", parallèles aux lèvres de l'essoreur, espacées de 25 mm et larges de 4 mm et 14 lignes noires "verticales", perpendiculaires aux lèvres, espacées de 160 mm et larges de 4 mm. Cette grille est placée dans le plan horizontal de la réflexion du faisceau lumineux sur la partie fixe de l'essoreur. Sa position est repérée par rapport à un point fixe tel qu'une extrémité des lèvres.

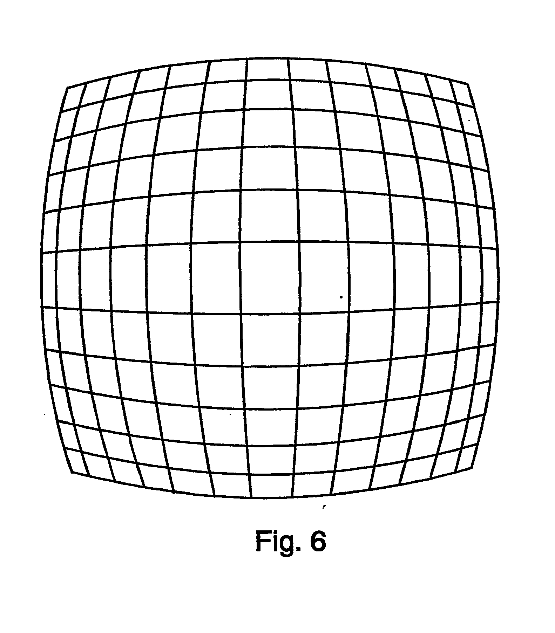

Une fois la grille en place, une image est acquise. L'image obtenue n'est naturellement pas une grille régulière, mais bien un ensemble de courbes qui mettent en évidence les déformations introduites par le système optique. Le résultat peut être tel que représenté sur la figure 6.

L'étalonnage va consister à établir la correspondance entre la position réelle sur la grille et la position à l'image. Le procédé global d'étalonnage comporte les étapes suivantes :
- récupération de l'image acquise ;
- extraction de la zone à traiter et transformation en un tableau bidimensionnel, chaque cellule du tableau contenant la valeur de niveaux de gris d'un pixel correspondant ;
- extraction de plusieurs colonnes, typiquement 15, à des abscisses fixées dans la zone à traiter ;
- détermination de la position des 12 lignes horizontales par détection de leurs ordonnées aux abscisses considérées ;
- extraction de plusieurs rangées du tableau de niveaux de gris à des ordonnées calculées en fonction de la position déterminée des 12 lignes horizontales, typiquement entre ces dites lignes ;
- détermination de la position des 14 lignes verticales par détection de leurs abscisses aux ordonnées considérées ;
- détermination d'équations pour les différentes lignes verticales et horizontales de la grille par optimisation polynomiale à partir des coordonnées obtenues dans les étapes précédentes ;
- calcul des intersections des 12 lignes horizontales et des 14 lignes verticales représentées par leurs équations.

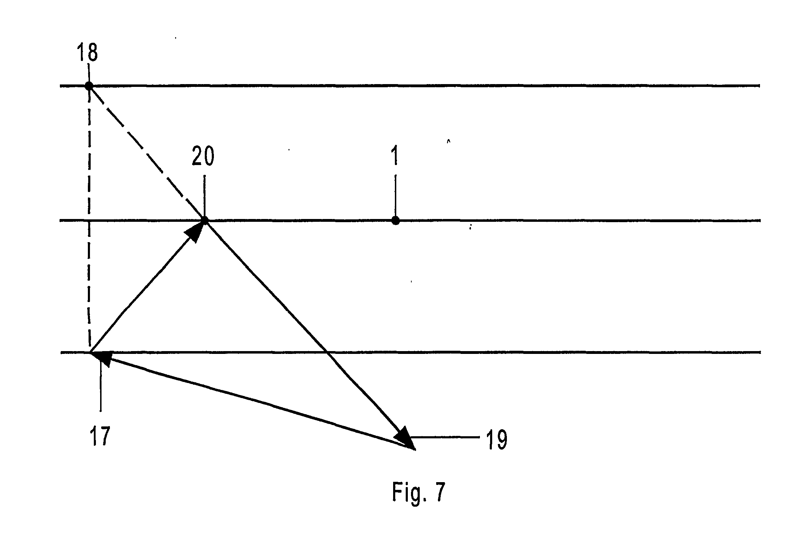

Grâce à cet étalonnage, la position repérée sur une image (en pixels) d'un point de la première réflexion (repère 13, figure 3 et repère 17, figure 7) du faisceau laser pourra être transformée en une position réelle en mm par rapport au point de référence.

Pour l'image de la deuxième réflexion (repère 14, figure 3 et repère 20, figure 7), sur la bande, on obtient avec cette correspondance la position réelle de l'"image virtuelle" 15 dans le plan horizontal de la première réflexion. Le raisonnement géométrique utilisé pour déterminer la position de la bande indique que l'ordonnée du point de la bande qui a produit une image donnée correspond au milieu des ordonnées de ces deux images (voir figure 3).

Cependant l'abscisse de ce point n'est pas la même que celle de ces deux images, excepté pour un point qui serait situé exactement sur l'axe de la caméra. Pour corriger le décalage de cette abscisse, on a besoin des coordonnées de la projection du point nodal 19 de la caméra dans le plan horizontal de la première réflexion (voir figure 7).

Pour déterminer la position du point nodal 19 de l'objectif de la caméra 10, on utilise l'image acquise pour la première partie de l'étalonnage. La position et les distances réelles des différentes lignes de la grille étant connues avec précision, on utilise les distances résultantes sur l'image correspondante (il suffit de 2 lignes horizontales et 2 lignes verticales) afin de recalculer la position de la caméra qui a pu fournir une telle image.

### Description d'un exemple de procédé de détection utilisant l'étalonnage

La détection de la position de la bande est effectuée par l'intermédiaire de la détection de la position des deux images du faisceau laser : position réelle pour la première réflexion et position "virtuelle" dans le même plan horizontal pour la seconde. Chacune de ces deux réflexions se présente sous forme d'une courbe.

On repère sur l'image donnée par la caméra la position de l'intersection des deux courbes avec les lignes verticales virtuelles correspondant aux verticales de la grille d'étalonnage. Ces verticales virtuelles sont décrites par leur équation définie lors de l'étalonnage. Ces positions doivent être ensuite corrigées afin de tenir compte de la déformation introduite par le système optique.

Le procédé global de détection comporte les étapes suivantes :
- extraction, hors du tableau représentant l'image, des niveaux de gris correspondant à une série de coordonnées, suivant l'équation d'une ligne verticale du procédé d'étalonnage : on extrait donc une ligne verticale réelle hors de l'image ; cette opération est répétée pour 14 lignes verticales virtuelles;
- détection de la position des deux réflexions du faisceau laser le long de ces 14 lignes virtuelles ;
- transformation de ces coordonnées donnant la position sur l'image des deux réflexions du faisceau laser, en coordonnées réelles relatives au point de référence. Pour effectuer cette transformation, on procède comme suit : pour une verticale, c'est-à-dire une abscisse, donnée, l'étalonnage a fourni une série d'ordonnées des points d'intersection avec les différentes horizontales de la grille d'étalonnage. II suffit donc d'interpoler sur cette série de points ;
- calcul de la position de la bande :
   1. l'ordonnée de chacun des 14 points est la moyenne des ordonnées réelles de chacune des deux réflexions ;
   2. pour l'abscisse de ces 14 points, on établit l'équation de la droite joignant le point nodal de l'objectif 19 de la caméra au point correspondant de l'image virtuelle 18 de la ligne laser et on en extrait le point 20 dont l'ordonnée correspond à celle calculée ci-dessus (figure 7).

Selon un mode d'exécution particulièrement avantageux de l'invention, on projette deux lignes laser au lieu d'une seule comme précédemment. L'image contient deux courbes pour les deux premières réflexions laser et deux courbes pour la réflexion sur la bande. Pour chaque paire de lignes, on détermine leur position ainsi que la distance séparant les deux lignes de la paire. L'avantage du dédoublement de la ligne laser de départ est de pouvoir obtenir une information complémentaire après traitement des données comme précédemment : l'inclinaison de la bande.

## Revendications

1. Procédé pour la mesure de distances par voie optique, de préférence par triangulation laser, sur une bande ou surface métallique (1) spéculaire ou quasi-spéculaire en défilement continu dans une installation, de préférence de galvanisation d'acier au trempé à chaud, **caractérisé par** les étapes suivantes :
- un faisceau lumineux, dit faisceau incident, est émis par une source (7), de préférence une source laser, incorporée dans une tête de mesure (10), ladite source projetant un motif (11) sous forme d'une pluralité de points, de préférence une ligne, disposés selon un axe perpendiculaire à la direction de défilement de la surface métallique, selon une direction d'incidence sur une partie fixe (5) non spéculaire, de la dite installation ;
- premièrement, une première partie dudit faisceau est réfléchie par ladite partie fixe (5), selon la même direction que celle du faisceau incident et en sens opposé, vers un détecteur (8) appartenant à ladite tête de mesure (10) et se trouvant à proximité immédiate de ladite source (7) ;
- deuxièmement, une autre partie dudit faisceau est réfléchie vers ladite bande métallique (1), d'où elle est encore réfléchie en direction dudit détecteur (8).

2. Procédé selon la revendication 1, **caractérisé en ce que** le détecteur de la tête de mesure (10) est une caméra (8) qui reçoit l'image dudit motif projeté (11), d'une part à partir de ladite partie fixe (5) et d'autre part à partir de la bande métallique (1), chaque point de l'image (12) provenant de la bande métallique (1) semblant correspondre à un point virtuel (15) qui est le point symétrique par rapport à un plan moyen passant par ladite bande (1) du point correspondant du faisceau incident sur ladite partie fixe.

3. Procédé selon la revendication 1 ou 2, **caractérisé en ce que** la détermination de la position et de la forme de la bande, de préférence en coupe transverse, sont déduites de l'image (11,12) captée par ledit détecteur.

4. Procédé selon l'une quelconque des revendications 1 à 3, **caractérisé en ce que** lesdites mesures sont effectuées en temps réel.

5. Procédé selon l'une quelconque des revendications précédentes, **caractérisé en ce que** ladite partie fixe de l'installation est un essoreur (5) en sortie de ligne continue de galvanisation au trempé à chaud, comprenant des couteaux à air.

6. Procédé selon la revendication 5, **caractérisé en ce que** la tête de mesure (10) projette sur ledit essoreur une ligne lumineuse parallèle aux couteaux à air de l'essoreur.

7. Procédé selon l'une quelconque des revendications précédentes, **caractérisé par** les étapes suivantes :
- étalonnage de la tête de mesure avant mise en marche de l'installation ;
- acquisition d'images en temps réel ;
- traitement des images obtenues, en tenant compte de l'étalonnage ;
- calcul, en une pluralité de points, de la distance entre la bande et les couteaux d'essorage.

8. Procédé selon la revendication 7, **caractérisé en ce que** ledit étalonnage est **caractérisé** au moins par les étapes suivantes :
- acquisition d'une image correspondant à un étalon comprenant une pluralité de lignes noires horizontales, c'est-à-dire parallèles aux lèvres de l'essoreur (5) et une pluralité de lignes noires verticales, c'est-à-dire perpendiculaires auxdites lèvres, ledit étalon étant placé dans le plan de la réflexion du faisceau lumineux sur la partie fixe de l'essoreur (5) et repéré par rapport à un point fixe de référence ;
- extraction d'une zone à traiter sur l'image et transformation de ladite zone en un tableau bidimensionnel de niveaux de gris ;
- extraction d'une pluralité de colonnes dudit tableau, correspondant à des abscisses fixées dans la zone à traiter ;
- détermination de la position desdites lignes horizontales par détection de leurs ordonnées auxdites abscisses ;
- extraction de plusieurs rangées du tableau de niveaux de gris à des ordonnées calculées en fonction de la position déterminée desdites lignes horizontales ;
- détermination de la position desdites lignes verticales par détection de leurs abscisses aux ordonnées calculées ;
- détermination des équations pour les différentes lignes de la grille par optimisation polynomiale à partir des coordonnées obtenues dans les étapes précédentes ;
- calcul des intersections desdites lignes horizontales et desdites lignes verticales représentées par leurs équations.

9. Procédé selon la revendication 7 ou 8, **caractérisé en ce qu'**il comprend les étapes suivantes :
- extraction, hors de ladite zone à traiter sur l'image, des niveaux de gris correspondant à une série de coordonnées, suivant l'équation d'une ligne verticale du procédé d'étalonnage, cette opération étant répétée pour une pluralité de lignes verticales virtuelles ;
- détection de la position des deux réflexions du laser le long de ces lignes virtuelles ;
- transformation des coordonnées donnant la position sur l'image des deux réflexions du laser, en coordonnées réelles relatives audit point de référence ;
- calcul de la position de la bande.

10. Procédé selon la revendication 9, **caractérisé en ce que**, pour effectuer cette transformation de coordonnées, on interpole pour une verticale donnée, c'est-à-dire une abscisse donnée, sur une série d'ordonnées des points d'intersection avec les différentes horizontales de la grille d'étalonnage, lesdits points ayant été fournis par l'étalonnage.

11. Procédé selon la revendication 10, **caractérisé en ce**, dans le calcul de la position de la bande, l'ordonnée calculée de chaque point de la bande pour une abscisse donnée correspondant au milieu des ordonnées des deux dites réflexions, l'abscisse desdits points est déterminée en établissant l'équation de la droite joignant le point nodal (19) du détecteur (8), de préférence de la caméra (8), au point correspondant de l'image virtuelle (18) de la ligne laser et en extrayant le point (20) dont l'ordonnée correspond à ladite ordonnée calculée.

12. Procédé selon l'une quelconque des revendications 7 à 11, **caractérisé en ce qu'**on régule en boucle fermée et en temps réel, pour chaque couteau, l'intensité du jet d'air comprimé en fonction de la distance entre l'extrémité de la lèvre et la bande, pour diminuer ou minimiser la dispersion de l'épaisseur du revêtement sur la bande ou encore pour que l'épaisseur effective de revêtement soit proche d'une valeur de consigne.

13. Procédé selon l'une quelconque des revendications précédentes, **caractérisé en ce qu'**au moins deux lignes laser sont émises par la source (7) de sorte à obtenir sur le détecteur (8), de préférence la caméra, deux courbes pour la première réflexion laser et deux courbes pour la réflexion sur la bande, et **en ce que**, pour chaque paire de lignes, on détermine leur position ainsi que la distance séparant les deux lignes de la paire, l'information obtenue étant traitée pour déterminer l'inclinaison de ladite bande.

## Claims

1. Process for measuring distances by optical means, preferably by laser triangulation, on a specular or quasi-specular metal strip or surface (1) in continuous motion in an installation, preferably a hot-dip steel galvanisation installation, **characterised by** the following steps:
- a light beam, referred to as incident beam, is emitted by a source (7), preferably a laser source, incorporated into a measurement head (10), said source projecting a pattern (11) in the form of a plurality of points, preferably a line, arranged along an axis that is perpendicular to the motion direction of the metal surface, in a incidence direction upon a non-specular, fixed part (5) of said installation;
- firstly, a first part of said beam is reflected by said fixed part (5), along the same path as that of the incident beam and in the opposite direction towards a detector (8) belonging to said measurement head (10) and located in the immediate vicinity of said source (7);
- secondly, another part of said beam is reflected towards said metal strip (1), from where it is further reflected in the direction of said detector (8).

2. Process according to Claim 1, **characterised in that** the detector of the measurement head (10) is a camera (8), which receives the image of said projected pattern (11) on the one hand from said fixed part (5) and on the other hand from the metal strip (1), each point of the image (12) coming from the metal strip (1) appearing to correspond to a virtual point (15), which is the point that is symmetrical with the corresponding point of the incident beam upon said fixed part with respect to a central plane passing through said strip (1).

3. Process according to Claim 1 or 2, **characterised in that** the determination of the position and shape of the strip, preferably in cross-section, are deduced from the image (11, 12) captured by said detector.

4. Process according to any of Claims 1 to 3, **characterised in that** said measurements are performed in real time.

5. Process according to any one of the preceding claims, **characterised in that** said fixed part of the installation is a dryer (5) at the outlet of the continuous hot-dip galvanisation line, comprising air knives.

6. Process according to Claim 5, **characterised in that** the measurement head (10) projects onto said dryer a luminous line that is parallel to the air knives of the dryer.

7. Process according to any one of the preceding claims, **characterised by** the following steps:
- calibration of the measurement head before the installation is put into operation;
- acquisition of images in real time;
- processing of the obtained images, taking account of the calibration;
- calculation at a plurality of points of the distance between the strip and the drying knives.

8. Process according to Claim 7, **characterised in that** said calibration is **characterised** at least by the following steps:
- acquisition of an image corresponding to a standard comprising a plurality of horizontal black lines, i.e. lines that are parallel to the lips of the dryer (5), and a plurality of vertical black lines, i.e. lines that are perpendicular to said lips, said standard being placed in the reflection plane of the light beam on the fixed part of the dryer (5) and marked in relation to a fixed reference point;
- extraction of a zone to be processed on the image and conversion of said zone into a two-dimensional greyscale table;
- extraction of a plurality of columns from said table, corresponding to fixed abscissae in the zone to be processed;
- determination of the position of said horizontal lines by detection of their ordinates at said abscissae;
- extraction of several rows from the greyscale table at ordinates calculated as a function of the determined position of said horizontal lines;
- determination of the position of said vertical lines by detection of their abscissae at the calculated ordinates;
- determination of the equations for the different lines of the grid by polynomial optimisation on the basis of the coordinates obtained in the previous steps;
- calculation of the intersections of said horizontal lines and of said vertical lines represented by their equations.

9. Process according to Claim 7 or 8, **characterised in that** it comprises the following steps:
- extraction from said zone to be processed on the image of the greyscales corresponding to a series of coordinates in accordance with the equation of a vertical line of the calibration process, this operation being repeated for a plurality of virtual vertical lines;
- detection of the position of the two laser reflections along these virtual lines;
- conversion of the coordinates giving the position of the two laser reflections on the image into real coordinates relative to said reference point;
- calculation of the strip position.

10. Process according to Claim 9, **characterised in that**, in order to convert coordinates, interpolation is carried out for a given vertical, i.e. a given abscissa, on a series of ordinates of the intersection points with the different horizontals of the calibration grid, said points having been supplied by the calibration.

11. Process according to Claim 10, **characterised in that**, when calculating the strip position, the calculated ordinate of each point on the strip for a given abscissa corresponding to the mid-point of the ordinates of the two said reflections, the abscissa of said points is determined by establishing the equation of the straight line joining the nodal point (19) of the detector (8), preferably the camera (8), to the corresponding point of the virtual image (18) of the laser line and by extracting the point (20) whose ordinate corresponds to said calculated ordinate.

12. Process according to any one of Claims 7 to 11, **characterised in that** the intensity of the jet of compressed air is controlled in a closed loop and in real time for each knife as a function of the distance between the end of the lip and the strip in order to reduce or minimise the variation in the thickness of the coating on the strip or indeed to ensure that the effective coating thickness is close to a set point value.

13. Process according to any one of the preceding claims, **characterised in that** at least two laser lines are emitted by the source (7) in such a way as to obtain on the detector (8), preferably the camera, two curves for the first laser reflection and two curves for the reflection on the strip, and **in that** the position of each pair of lines is determined as is the distance separating the two lines of the pair, the obtained information being processed in order to determine the slope of said strip.

## Patentansprüche

1. Verfahren für die Entfernungsmessung auf optischem Wege, vorzugsweise durch Lasertriangulation auf einem spiegelnden bzw. nahezu spiegelnden Metallband oder einer Metalloberfläche (1), das/die fortlaufend in einer Vorrichtung vorbeigeführt wird; hierbei handelt es sich vorzugsweise um eine Vorrichtung zur Galvanisierung warmgehärteten Stahles. Das Verfahren ist durch die folgenden Schritte **gekennzeichnet**:
- Ein Strahlenbündel, ankommendes Strahlenbündel genannt, wird von einer Lichtquelle (7), vorzugsweise einer Laserlichtquelle, abgegeben, die in einem Messkopf (10) enthalten ist; die besagte Lichtquelle projiziert ein Muster (11) in Form verschiedener Punkte, vorzugsweise in einer Linie angeordnet, die sich im rechten Winkel zum Verfahrweg der metallischen Oberfläche entsprechend einer Einfallsrichtung auf einem unbeweglichen, nicht spiegelnden Teil (5) der besagten Vorrichtung befindet;
- Erstens wird ein erster Teil des besagten Strahlenbündels von dem besagten unbeweglichen Teil (5) entsprechend der gleichen Richtung wie der des ankommendes Strahlenbündels und im entgegen gesetzten Richtungssinn in Richtung eines Messfühlers (8) reflektiert, der zu dem besagten Messkopf (10) gehört und sich in unmittelbarer Nähe der Lichtquelle (7) befindet;
- Zweitens wird ein weiterer Teil des besagten Strahlenbündels in Richtung des Metallbandes (1) reflektiert, von wo er weiterhin in Richtung des besagten Messfühlers (8) reflektiert wird.

2. Verfahren gemäß Anspruch 1, **dadurch gekennzeichnet, dass** der Messfühler des Messkopfs (10) in Form einer Kamera (8) vorliegt, die das Bild des besagten projizierten Musters (11) einerseits von dem besagten unbeweglichen Teil (5) und andererseits von dem Metallband (1) erhält; jeder Bildpunkt (12), der vom Metallband (1) stammt und hierbei einem virtuellen Punkt (15) zu entsprechen scheint, stellt den Symmetriepunkt im Verhältnis zu einer mittleren Ebene dar, die durch das Vorbeiführen des besagten Bandes (1) des Punkts entsprechend dem Ankommenden Strahlenbündel auf dem besagten unbeweglichen Teil erzeugt wird.

3. Verfahren gemäß den Ansprüchen 1 oder 2, **dadurch gekennzeichnet, dass** die Bestimmung der Position und der Form des Bandes, vorzugsweise durch Querschnitt, von dem durch den besagten Messfühler erfassten Bild (11, 12) abgeleitet wird.

4. Verfahren gemäß einem der Ansprüche 1 bis 3, **dadurch gekennzeichnet, dass** die besagten Messungen in Echtzeit durchgeführt werden.

5. Verfahren gemäß einem der vorherigen Ansprüche, **dadurch gekennzeichnet, dass** es sich bei besagtem unbeweglichem Teil der Vorrichtung um eine Abquetschvorrichtung (5) am Ende der Fertigungslinie zur Galvanisierung mit Warmhärtung handelt, die Luftmesser enthält.

6. Verfahren gemäß dem Anspruch 5, **dadurch gekennzeichnet, dass** der Messkopf (10) auf der besagten Abquetschvorrichtung eine Lichtlinie parallel zu den Luftmessern der Abquetschwalze projiziert.

7. Verfahren gemäß einem der vorherigen Ansprüche, **dadurch gekennzeichnet, dass** die folgenden Schritte angewendet werden:
- Kalibrierung des Messkopfes vor der Inbetriebnahme der Vorrichtung;
- Aufnahme der Bilder in Echtzeit;
- Bearbeitung der so erhaltenen Bilder unter BE.rüaksiahtigung der Kalibrierung;
- Berechnung, für diverse Punkte, des Abstandes zwischen dem Band und den Abquetschmessern.

8. Verfahren gemäß dem Anspruch 7, **dadurch gekennzeichnet, dass** die besagte Kalibrierung durch mindestens die folgenden Schritte **gekennzeichnet** ist:
- Aufnahme eines Bildes, das einem Eichmaß entspricht und verschiedene schwarze, horizontale Linien umfasst, d.h. parallel zu den Lippen der Abquetschvorrichtung (5), sowie viele vertikale, schwarze Linien, d.h. im rechten Winkel zu besagten Lippen. Das besagte Eichmaß wird in der Reflektionsebene des Strahlenbündels auf dem unbeweglichen Teil der Abquetschwalze (5) platziert und im Verhältnis zu einem feststehenden Referenzpunkt bezeichnet;
- Extraktion eines zu bearbeitenden Bereichs des Bildes und Umwandlung des besagten Bereiches in eine zweidimensionale Graustufen-Tabelle;
- Extraktion vieler Spalten der besagten Tabelle, die den feststehenden Abszissen im zu bearbeitenden Bereich entsprechen;
- Bestimmung der Position der besagten horizontalen Linien durch Erfassung ihrer Ordinaten auf den besagten Abszissen;
- Extraktion diverser Zeilen der Graustufen-Tabelle mit in Abhängigkeit von der bestimmten Position der besagten horizontalen Linien berechneten Ordinaten;
- Bestimmung der Position der besagten vertikalen Linien durch Erfassung ihrer Abszissen zu den berechneten Ordinaten;
- Bestimmung der Gleichungen für die verschiedenen Linien des Gitters durch polynominale Optimierung ausgehend von den in den vorherigen Schritten erhaltenen Koordinaten;
- Berechnung der Schnittpunkte der besagten horizontalen und vertikalen Linien, die durch ihre Gleichungen repräsentiert werden.

9. Verfahren gemäß den Ansprüchen 7 oder 8, **dadurch gekennzeichnet, dass** es die folgenden Schritte umfasst:
- Extraktion, aus dem zu bearbeitenden Bereich des Bildes, der einer Serie von Koordinaten entsprechenden Graustufen, entsprechend der Gleichung einer vertikalen Line des Kalibrierungssystems; dieser Ablauf wird für eine Vielzahl der virtuellen vertikalen Linien wiederholt;
- Erfassung der Position der zwei Laserreflektionen entlang dieser virtuellen Linien;
- Transformation der die Position auf dem Bild der zwei Laserreflektionen angegebenen Koordinaten, in reale, in relativer Position zu besagtem Referenzpunkt stehende Koordinaten.
- Berechnung der Position des Bandes.

10. Verfahren gemäß dem Anspruch 9, **dadurch gekennzeichnet, dass**, um diese Koordinatentransformation durchzuführen, man für eine gegebene Vertikale, d.h. eine gegebene Abszisse, für eine Reihe von Koordinaten die Schnittpunkte mit den verschiedenen Horizontalen des Kalibrierungsgitters interpoliert; die verschiedenen Punkte wurden hierbei durch die Kalibrierung geliefert.

11. Verfahren gemäß dem Anspruch 10, **dadurch gekennzeichnet, dass** bei der Berechnung der Position des Bandes, die für jeden Punkt des Bandes berechnete Ordinate für eine gegebene Abszisse in der Mitte den Ordinaten der beiden besagten Reflektionen entspricht und die Abszisse der besagten Punkte bestimmt wird, indem eine Gleichung für die den Knotenpunkt (19) des Messfühlers (8), vorzugsweise der Kamera (8), mit der den virtuellen Punkt (18) der Laserlinie verbindenden Gerade erstellt wird und indem der Punkt (20) extrahiert wird, dessen Ordinate der besagten berechneten Ordinate entspricht.

12. Verfahren gemäß einem der Ansprüche 7 bis 11, **dadurch gekennzeichnet, dass** man über einen geschlossenen Kreislauf und in Echtzeit für jedes Messer die Intensität des Druckluftstrahles in Abhängigkeit der Entfernung zwischen der Außenseite der Lippe und dem Band geregelt wird, um die Streuung der Schichtdicke auf dem Band zu reduzieren bzw. zu minimieren; somit auch, damit die effektive Beschichtungsdicke dicht bei einem zugewiesenen Wert liegt.

13. Verfahren gemäß einem der vorherigen Ansprüche, **dadurch gekennzeichnet, dass** mindestens zwei Laserlinien von der Lichtquelle (7) so abgegeben werden, dass am Messfühler (8), vorzugsweise die Kamera, zwei Kurven für die erste Laserreflektion und zwei Kurven für die Reflektion auf dem Band erhalten werden, sowie ferner **dadurch**, dass man für jedes Linienpaar ihre Position sowie den Abstand bestimmt, der die beiden Linien des Paares trennt; die hierdurch erhaltene Information wird verarbeitet, um die Neigung des besagten Bandes zu bestimmen.
